# EUROPEAN PATENT APPLICATION

(11) **EP 1 034 697 A2**
(43) Date of publication of application: **13.09.2000**
(21) Application number: 00650016.9
(22) Date of filing: 08.03.2000
(51) Int. Cl.: A01G 1/04, C12N 1/14, C05F 17/02

(54) **Growing medium for mushrooms**

(30) Priority: 09.03.1999 IE 990192
(71) Applicant: Kenny, Thomas Seymour, Birr, County Offaly (IE)
(72) Inventor: Kenny, Thomas Seymour, Birr, County Offaly (IE)
(74) Representative: O'Connor, Donal Henry

(57) **Abstract**

A growing medium for mushrooms that consists of the addition of calcareous seaweed to the casing and compost. The calcareous seaweed is chosen from Lithothamniun calcareum and Maerl and is selected to have a salt content not exceeding 3% by weight.

## Description

### Introduction

The present invention relates to mushroom growing and in particular to the growing medium used in the commercial production of mushrooms.

Commercial mushrooms can be grown in bags or trays. The conventional growing medium for commercial mushrooms is a double strata medium: the top strata is called a casing and is generally a mixture of peat moss and limestone, and functions largely to retain moisture. The second and larger stratum is a mixture of compost and gypsum and it is in this part of the medium that the mushrooms are seeded. The growing medium is either filled into bags or placed on trays on which the mushrooms are grown.

There are two major problems with commercially grown mushrooms. The first one is that their taste does not sufficiently reflect the taste of the wild field mushrooms, and secondly, the quality of commercially grown mushrooms is largely determined by their colour and efforts are made to provide a commercially grown mushroom that is as white as possible and so appeals to the consumer. There is a need for the improvement of the organoleptic properties as well as the visual properties of commercially grown mushrooms and the present invention is directed towards providing an improved growing media.

There are problems associated with the present compositions of casing and compost. As stated above, generally the standard growing medium in the top layer casing is a combination of ground limestone and peat moss. While ground limestone is a suitable additive to the peat moss to provide a neutral growing medium efforts are being made to provide other growing mediums. Indeed, a by-product of the sugar industry, namely, of beet growing, has been used to substitute for limestone for mixing with peat, however, it has been found to have some major drawbacks in that while it produced an improved mushroom with greatly enhanced organoleptic properties, there were problems in relation to disease in that it was difficult to keep the growing medium free from contamination and thus the mushrooms were exposed to possible attack by various fungi and other diseases.

The compost is generally a mixture of gypsum, wheatened straw, poultry and horse manure, which is heated to remove microbial organisms. Gypsum is usually added to make the compost friable. The gypsum is mixed throughout so that the compost is of the right texture being neither too clingy nor too sticky. Gypsum is not an ideal additive on its own. A good nutritious growing medium consists of a combination of vitamins, minerals and trace elements. Modern commercial growing mediums are often lacking in these essential ingredients. Studies comparing commercially grown vegetables to organically grown vegetables have shown that the commercially grown vegetables have in fact 25% higher water content than their organic equivalents. This is thought to be due to the lower nutrient profile in the commercially grown vegetables. Such organically grown vegetables similarly have better organoleptic properties and this is thought to be due to the same reason.

Recent studies of wild mushrooms have shown that they grow under a variety of conditions. Wild mushrooms have been shown to have an ability to take up trace elements from the soil. Because of continuous heavy cropping of agricultural land, where artificial fertilisers are applied, many trace elements are used up before they are naturally replaced. Such trace elements are often missing in the modern diet and are essential for health. Thus is would be very advantageous to provide a growing medium that has a rich nutrient profile for growing commercial mushrooms.

It is an object of the present invention to provide a commercially grown mushroom, which has equal qualities of the wild mushroom growing in the field.

### Statements of Invention

The present invention provides a growing medium for mushrooms comprising a casing on top of compost, characterised in that calcareous seaweed is added to the growing medium. The presence of the calcareous seaweed in the growing medium surprisingly produced mushrooms that had increased % dry weight; increased mineral content with improved taste and colour.

In one embodiment the calcareous seaweed is added to the casing alone. Surprisingly, when calcareous seaweed was added to the casing alone, the mushrooms produced had increased % dry weight and nutrient content.

In another embodiment the calcareous seaweed is added at a concentration in the range of 1-200 kg/m³, preferably 40-80 kg/m³, most preferably approximately 60 kg/m³ to the casing.

In another embodiment the calcareous seaweed is added at a concentration in the range of 1-100 kg/tonne, preferably 5-50 kg/tonne, most preferably approximately 25 kg/tonne to the compost.

In a preferred embodiment of the invention the calcareous seaweed is chosen from Lithothamniun calcareum and Maerl.

In another embodiment of the invention the calcareous seaweed is chosen to have a salt concentration up to 3 % by weight. Surprisingly, when the salt concentration is 3% or less, the mushrooms produced have increased mineral content, in particular sodium concentration.

In another embodiment of the invention the calcareous seaweed is added as a powder. The calcareous seaweed is ground to a fine powder. Structurally the seaweed has a large surface area. The combination of the structure of the seaweed and its small particle size as a consequence of it being ground to a powder renders the material highly reactive with elevated bioavailability.

Preferably the particle size of the powdered calcareous seaweed does not exceed 20µ, most preferably in the range of 2.5 to 5µ. This particle size is apparently produces optimal bioavailability.

In another embodiment the calcareous seaweed is prepared by:
collecting and drying the seaweed;
grinding the seaweed to a particle size that does not exceed 20µ.

The advantages of using calcareous seaweed in the mushroom growing medium are many. Firstly, it is harvested in extremely hygienic conditions and is almost totally free from any contamination, disease or anything else likely to prove harmful for the mushrooms. During the drying process it reaches temperatures, which renders it sterile. Secondly, as mentioned above, calcareous seaweed for example Lithothamnium calcareum has a high nutrient value and thus when mixed with the medium will provide a compound with a high nutrient profile. Thus growing mushrooms in such an environment can provide a rich source of trace elements, minerals and vitamins that are usually available in the fields for wild field mushrooms to absorb. It has been surprisingly found that this growing medium provides an extremely efficient growing medium leading to a mushroom with greatly enhanced organoleptic properties and a more attractive bright colour, which is particularly important to the consumer. Additionally the mushrooms have high constituent nutrients and a much higher dry matter content and longer shelf life than conventional commercially grown mushrooms. They are much closer in their general composition and taste to wild mushrooms than has hitherto been achieved commercially. In nutrient value they may exceed the dietary qualities of any mushroom that has hither to been available for human consumption. Field mushrooms may grow in areas that are deficient in certain trace elements. For example areas in Co. Offaly are notoriously low in copper, cobalt and iodine. It is reasonable to expect that field mushrooms growing in these fields would be lacking in these elements. Thus the inclusion of Lithothamnium calcareum in mushroom growing provides a unique controlled supply of many valuable nutrients. The compost has provided a unique balance of minerals and trace elements, which can be absorbed by the mycelium of the mushroom with the resulting benefits to the mushroom. Finally, while sufficient work has not yet been carried out, it appears that the key to the use of Lithothamnium calcareum is that it contains a high level of calcium which is four times more carbolically soluble than basic lime, making it an ideal neutralising agent when mixed with peat. Generally speaking, the level of Lithothamnium calcareum used in the casing would be such as to bring the pH value of the mixture as near as possible to neutral, namely, 7.4.

### Detailed Description of the Invention

The invention will be more clearly understood from the following description of some examples of media formulated in accordance with the invention, which incorporates calcareous seaweed.

Calcareous seaweed comes from the group of marine algae of which calcareous incrustation of its tissues is one of its characteristics and hence it's coral like appearance. It is a natural mineral source. Examples of calcareous seaweed are Lithothamnium calcareum or Maerl. We have tested several forms of calcareous seaweed and they all function as mineral sources. However, the one that was most readily available to us was Lithothamnium calcareum.

Lithothamnium calcareum is added to the casing and to the compost. Lithothamnium calcareum lives in the sea on shallow seabeds and it is essentially from the seawater that it draws the necessary elements for its existence. It is from this ability that it can behave as a genuine mineral accumulator and can provide these elements in elaborated, organic, natural combinations and associations having an incomparable biological value due to the particular structure an organic origin and marine environment of the Lithothamnium cell. Thus it is constantly exposed to trace elements which it continually absorbs giving it a very high nutrient profile.

Typical constituents of Lithothamnium calcareum are listed in table 1.

**Table 1.**

| **Nutrient Classification** | **Nutrient** |
|---|---|
| **Principal Elements** | Calcium |
| | Magnesium |
| | Sodium |
| | Potassium |
| | Phosphate |
| | Sulphur |
| | Chloride |
| | SiO2 |
| **Amino Acids** | Aspartic |
| | Lysine |
| | Proline |
| | Glutamic |
| | C |
| **Trace Elements** | Iron |
| | Iodine |
| | Manganese |
| | Copper |
| | Cobalt |
| | Boron |
| | Fluorine |
| | Arsenic |
| | Bromine |
| | Zinc |
| | Aluminium |
| | Nickel |
| | Chromium |
| | Strontium |
| | Lead |
| | Silver |
| | Molybdenum |
| | Tin |
| | Indium |
| | Titanium |

The first studies that were performed looked at the effect of the presence of Lithothamnium calcareum when added to the casing of a conventional growing medium on mushroom growth. The study was set up as follows:

| CASING | | |
|---|---|---|
| 1. | Peatmoss | 1 cubic metre |
| | Limestone | 60 kg |
| | | |
| 2. | Peatmoss | 1 cubic metre |
| | Sugar Beet /Lime | 60 kg |
| | | |
| 3. | Peatmoss | 1 cubic metre |
| | Lithothamnium calcareum | 30 kg |
| | | |
| 4. | Peatmoss | 1 cubic metre |
| | Lithothamnium calcareum | 60 kg |
| | | |
| 5. | Peatmoss | 1 cubic metre |
| | Lithothamnium calcareum | 120 kg |

Tables 2 to 4 show data demonstrating increases in % dry matter, mineral and trace element content in mushrooms whose growing medium includes Lithothamnium calcareum in the casing.

**TABLE 2**

| **% Dry Matter of Mushrooms** | | | | |
|---|---|---|---|---|
| **Ingredients in the Casing** | **Sample Mushroom Weight** | **Sample Mushroom Weight after Drying** | **% Dry Matter** | **Average % Dry Matter** |
| **1 Cubic Metre Peatmoss 60 Kg Limestone** | 140.8 | 7.9 | 5.6 | **5.8** |
| | 137.2 | 8.2 | 6.0 | |
| **1 Cubic Metre Peatmoss 60 Kg Sugar Beet/Lime** | 155.3 | 10.0 | 6.4 | 6.4 |
| | 129.1 | 8.3 | 6.4 | |
| **1 Cubic Metre Peatmoss 30 Kg Lithothamnium Calcareum** | 133.7 | 7.7 | 5.8 | 6.05 |
| | 129.9 | 8.2 | 6.3 | |
| **1 Cubic Metre Peatmoss 60 Kg Lithothamnium Calcareum** | 143.0 | 8.7 | 6.1 | 6.1 |
| | 140.5 | 8.6 | 6.1 | |
| **1 Cubic Metre Peatmoss 120 Kg Lithothamnium Calcareum** | 151.7 | 10.1 | 6.7 | **6.75** |
| | 140.3 | 9.5 | 6.8 | |

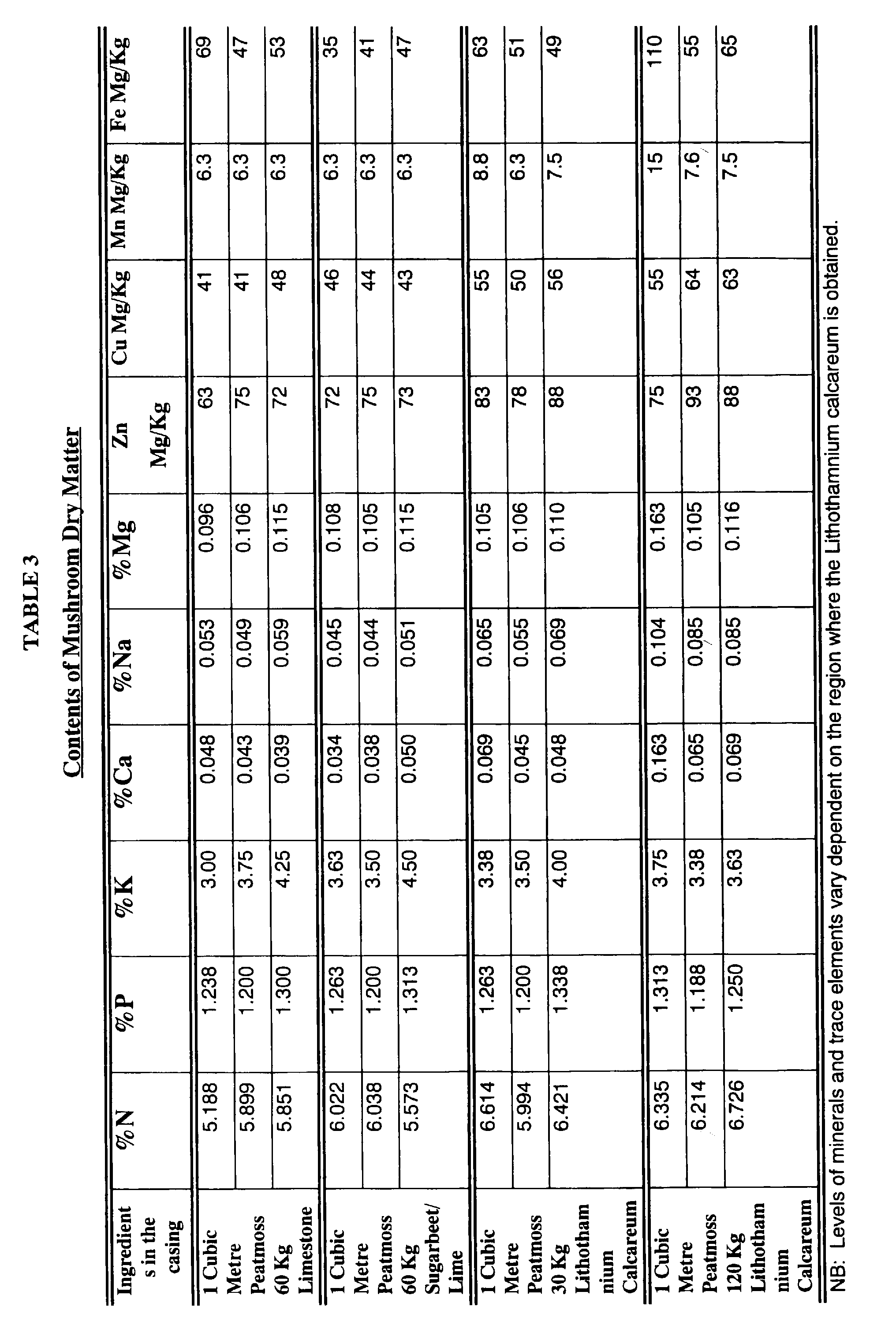

**TABLE 4**

| **Average Trace Element Content of Mushroom Dry Matter** | | | |
|---|---|---|---|
| **Trace Element** | **1 Cubic Metre Peatmoss 60 Kg Limestone** | **1 Cubic Metre Peatmoss 120 Kg Lithothamnium Calcareum** | **% Difference*** |
| N (Nitrogen) % | 5.646 | 6.425 | 13.79 increase |
| P (Phosphorous) % | 1.246 | 1.25 | 0.32 increase |
| K (Potassium) % | 3.666 | 3.58 | 2.1 decrease |
| Ca (Calcium) % | 0.0433 | 0.099 | 128.63 increase |
| Na (Sodium) % | 0.0537 | 0.09133 | 70.2 increase |
| Mg (Magnesium) % | 0.1057 | 0.128 | 21.14 increase |
| Zn (Zinc) Mg/Kg | 70 | 85.33 | 21.9 increase |
| Cu (Copper) Mg/Kg | 43.33 | 60.66 | 40 increase |
| Mn (Manganese) Mg/Kg | 6.3 | 10.03 | 59.25 increase |
| Fe (Iron) Mg/Kg | 56.33 | 76.66 | 36.10 increase |

| | | | |
|---|---|---|---|
| * Statistics have not been performed on this data. | | | |

Table 2 summarises the results from the first flush (or growth) of mushrooms growing from the casing. The mushroom spawn is seeded to colonise the surface of the casing and this forms a network. The mycelium then grows upwards from the compost and adheres to the network. These mushrooms thus have access to the high nutrient profile of Lithothamnium calcareum. In table 2 it can be seen that mushrooms grown in the absence of Lithothamnium calcareum have a dry matter content of 5.8%, whilst those grown in the presence of Lithothamnium calcareum show a dry matter content of 6.75%. Relatively, this is an increase of 15%.

The mushrooms increased their dry matter content and this is thought to represent higher levels of minerals and trace elements in these mushrooms.

Tables 3 and 4 summarise the result of individual trace elements and minerals in the mushroom dry matter. Table 4 is the average results providing a simple comparison between casing with limestone and casing with Lithothamnium calcareum. The results show trends towards increases in all of the major elements, except for phosphorus and potassium, which show similar content for both treatments. This suggests that the presence of Lithothamnium calcareum in the casing results in the production of a mushroom with a higher mineral content. This increase in mineral content is consistent with the increase in dry matter content. The resultant mushrooms thus have a higher nutritional value, having absorbed a variety of trace elements and minerals presented to them in a readily available form in Lithothamnium calcareum.

Further studies were performed including Lithothamnium calcareum in both the casing and the compost compared to a conventional growing medium as follows:

| **CASING** | | |
|---|---|---|
| ***CONTROL*** | | |
| 1. | Peatmoss | 1 cubic metre |
| | Limestone | 60 kg |

| TREATMENT | | |
|---|---|---|
| 1. | Peatmoss | 1 cubic metre |
| | Lithothamnium calcareum | 60 kg |

| **COMPOST** | | |
|---|---|---|
| ***CONTROL*** | | |
| 3. | Compost and gypsum at 2.5% | 100 kg |

| ***TREATMENT*** | | |
|---|---|---|
| 3. | Compost and gypsum at 2.5% | 100 kg |
| | Uthothamnium calcareum | 2.5 kg |

Tables 5 to 10 show data demonstrating increases in % mushroom yield, improvement in mushroom taste, increases in % dry matter, improvements in colour rating and mineral and trace element content in mushrooms whose growing medium includes Lithothamnium calcareum in both the first and second strata.

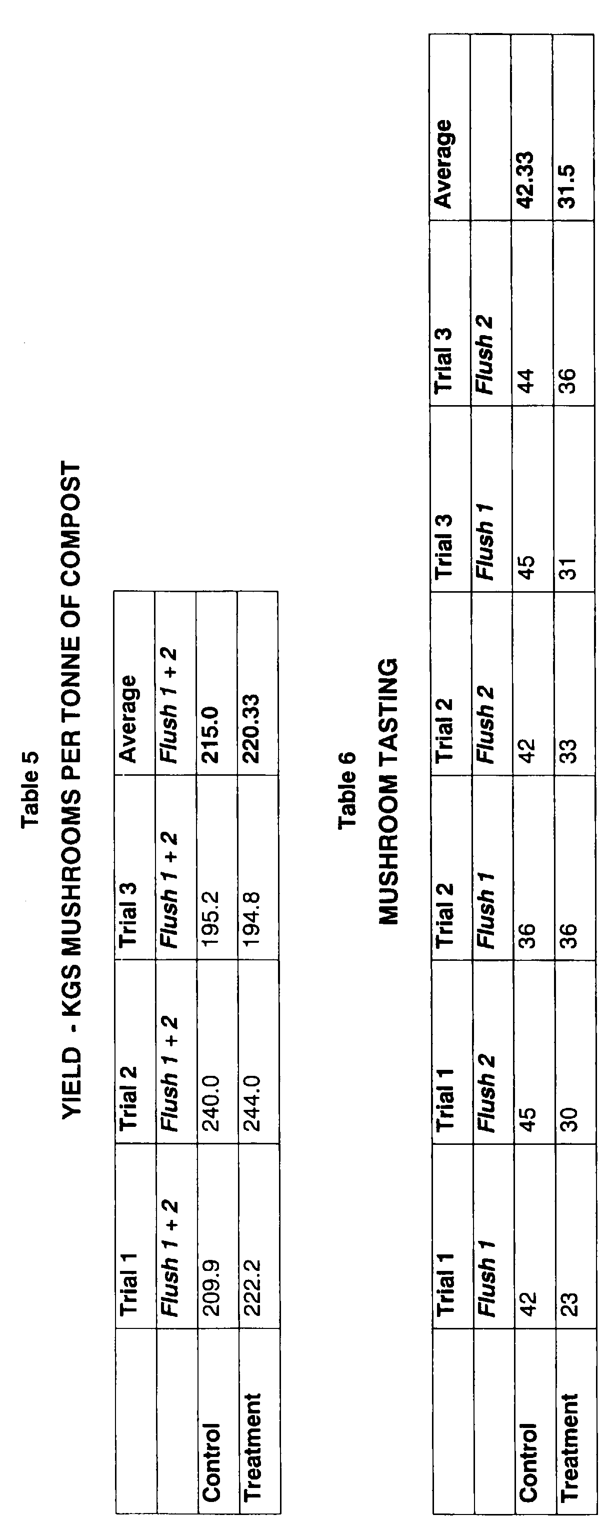

The mushrooms were ranked 1 for excellent, 2 for good and 3 for poor. Therefore out of a group of 20 tasters, the best possible rank sum for a sample is 20, i.e. all 20 tasters ranked it 1, while the worst possible rank sum is 60, i.e. all 20 tasters ranked it 3. This data suggests that the presence of Lithothamnium calcareum enhances the flavour of the mushrooms.

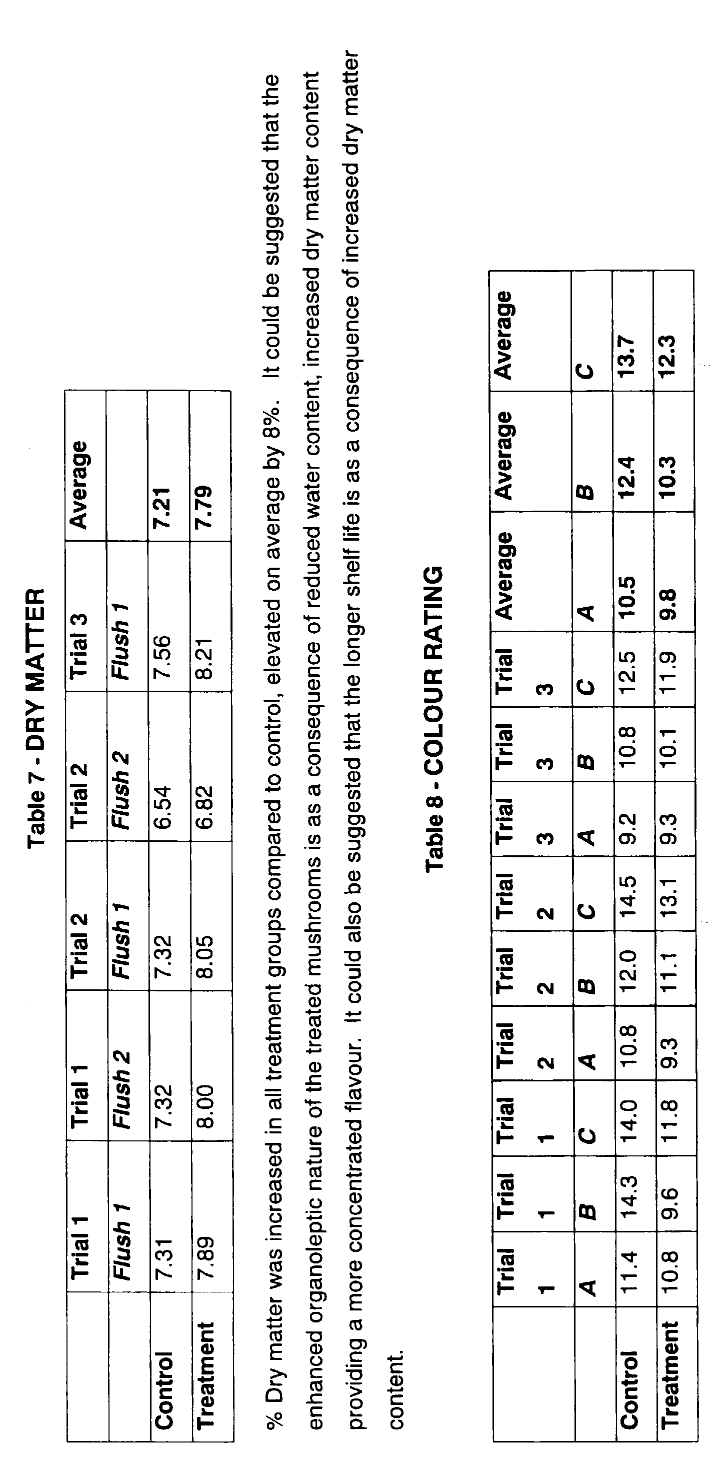

A = Days 1 Flush 1; B = Cold room 3 days Flush 1; C = Ambient temperature 3 days
The colour of the mushrooms was tested using a Minolta meter, which measures colour by reflectance. A lower number is indicative of better colour. The treated mushrooms were much whiter in colour than the controls.

Tables 9 and 10 demonstrate the effect of Lithothamnium calcareum on trace element and mineral mushroom content when present in both strata of the growing medium.

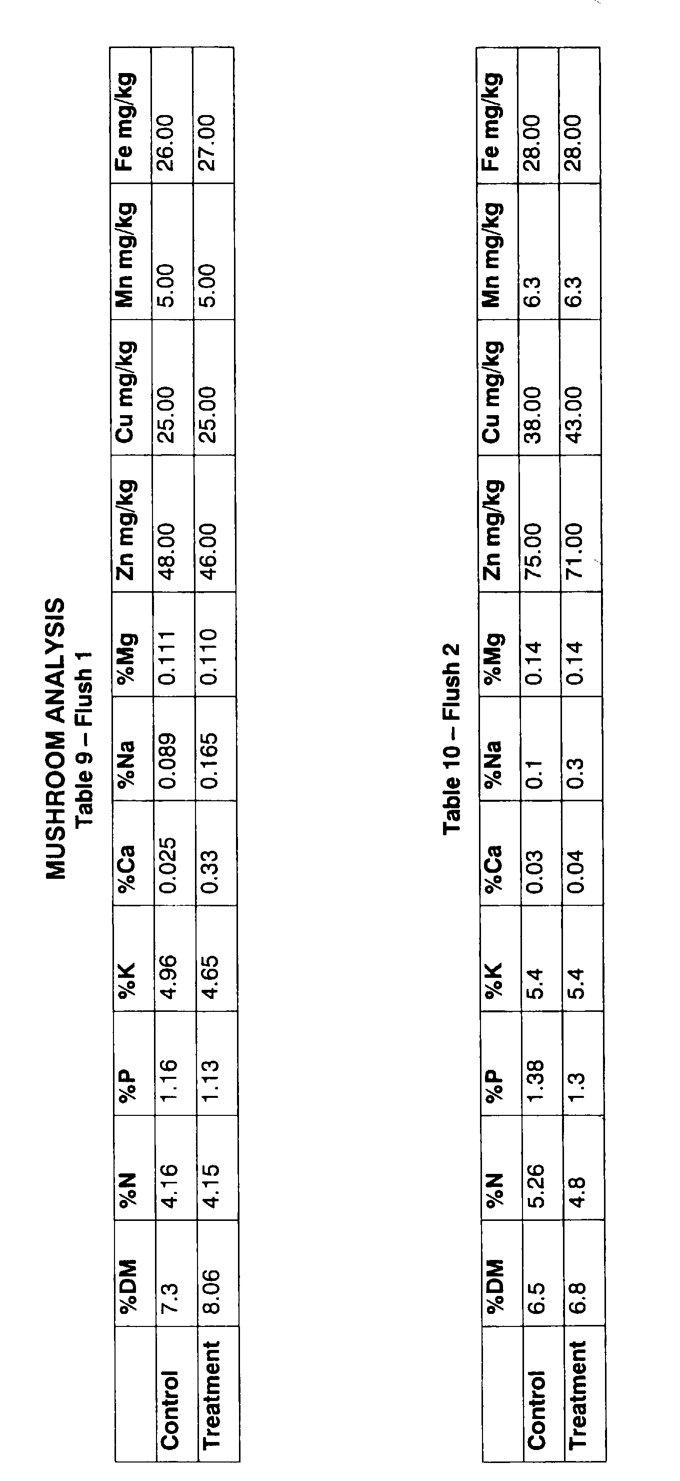

The sodium content is increased in the mushrooms in both the first and second flush. This correlates to the increase in % dry matter also seen in these mushrooms. If a hypothesis was to be provided, the Lithothamnium calcareum contains a high level of salts complexed with constituent minerals. The salt content of the Lithothamnium calcareum is approximately 3% by weight. When ground into a fine powder, the Lithothamnium calcareum acts as a catalyst for the even distribution and the gradual release of salts in the casing and the compost. These are absorbed by the mushroom resulting in a whiter tastier mushroom with higher yield, higher dry matter content and a longer shelf life.

The nitrogen content of the mushrooms produced from Lithothamnium calcareum treatments was surprisingly lower than the control in the second flush. This could indicate that the interaction between the Lithothamnium calcareum and the compost causes ammonia to be released into the atmosphere during production, which is a desirable action during compost manufacture

Obviously, different formulations of Lithothamnium calcareum, other than in its pure form, as previously listed in table 1, may be used. Several formulations exist, for example: it can be obtained from Primpol bank of the coast of Brittany, France or from Castletown Beare, Cork, Ireland. It will be noted, however, that there are considerable trace elements available in basic Lithothamnium calcareum (MAERL) or other calcareous seaweed subspecies. Many other mixtures may be used.

One of the major advantages of Lithothamnium calcareum is that the nutrient uptake by the mushroom from these formulae will enhance the value of the mushroom as a health product for human consumption. It could be an extremely important selling point for the mushroom growing industry.

Additionally, mushroom crops produced from the introduction of Lithothamnium calcareum will provide an increased yield by either/or weight and volume for the grower over a shorter growing cycle.

The invention is not limited to the embodiments hereinbefore described but may be varied in both construction and detail.

## Claims

1. A growing medium for mushrooms comprising a casing on top of compost characterised in that calcareous seaweed is added to the growing medium.

2. A growing medium for mushrooms as claimed in claim 1, wherein the calcareous seaweed is added to the casing alone.

3. A growing medium for mushrooms as claimed in claims 1 or 2 wherein the calcareous seaweed is added at a concentration in the range of 1-200 kg/m³ to the casing.

4. A growing medium for mushrooms as claimed in claim 3 wherein the calcareous seaweed is added at a concentration in the range of 40-80 kg/m³ to the casing.

5. A growing medium for mushrooms as claimed in claims 3 or 4 wherein the calcareous seaweed is added at a concentration of approximately 60 kg/m³ to the casing.

6. A growing medium for mushrooms as claimed in any preceding claim wherein calcareous seaweed is added at a concentration in the range of 1-100 kg/tonne to the compost.

7. A growing medium for mushrooms as claimed in claim 6 wherein the calcareous seaweed is added at a concentration in the range of 5-50 kg/tonne to the compost.

8. A growing medium for mushrooms as claimed in claims 6 or 7 wherein the calcareous seaweed is added at a concentration of approximately 25 kg/tonne to the compost.

9. A growing medium for mushrooms as claimed in any preceding claims, wherein the calcareous seaweed is chosen from Lithothamnium calcareum and Maerl.

10. A growing medium for mushrooms as claimed in any preceding claim wherein the calcareous seaweed is chosen to have a salt concentration up to 3 % by weight.

11. A growing medium for mushrooms as claimed in any preceding claim wherein the calcareous seaweed is added as a powder.

12. A growing medium for mushrooms as claimed in any preceding claim wherein the particle size of the powdered calcareous seaweed does not exceed 20 µ.

13. A growing medium for mushrooms as claimed in claim 12 wherein the calcified seaweed the particle size of the powdered calcareous seaweed is in the range of 2.5 to 5µ.

14. A growing medium for mushrooms as claimed in any preceding claim wherein the calcareous seaweed is prepared by:
collecting and drying the seaweed;
grinding the seaweed to a particle size that does not exceed 20µ.
